Europäisches Patentamt

European Patent Office

Office européen des brevets

(19)

(11) Numéro de publication : **0 365 442 B1**

(12)                    **FASCICULE DE BREVET EUROPEEN**

(45) Date de publication du fascicule du brevet :
29.01.92 Bulletin 92/05

(51) Int. Cl.⁵ : **B29C 51/14,** B44C 3/08,
B05C 21/00, C09J 7/02,
B32B 27/08

(21) Numéro de dépôt : 89420387.6

(22) Date de dépôt : 12.10.89

(54) **Article thermoformé présentant des propriétés adhésives sur l'une de ses faces.**

(30) Priorité : 21.10.88 FR 8814226

(43) Date de publication de la demande :
25.04.90 Bulletin 90/17

(45) Mention de la délivrance du brevet :
29.01.92 Bulletin 92/05

(84) Etats contractants désignés :
DE ES IT

(56) Documents cités :
EP-A- 0 095 093
DE-A- 3 123 355
US-A- 4 681 648

(73) Titulaire : **PLASTOCHIM**
**Route de Nuits**
**F-69830 Saint Georges de Reneins (FR)**

(72) Inventeur : **Pernot, Alain**
**67 Rue des Flachères**
**F-69390 Charly (FR)**

(74) Mandataire : **Laurent, Michel et al**
**Cabinet LAURENT et CHARRAS, 20, rue Louis**
**Chirpaz B.P. 32**
**F-69131 Ecully Cedex (FR)**

## Description

La présente invention a trait à un nouveau type d'articles thermoformés dont l'une des faces présente des propriétés adhésives lui permettant d'être fixées automatiquement contre une autre surface et ce, de manière temporaire ou permanente.

Dans la suite de la description, l'invention sera décrite pour une application particulière, à savoir le domaine des cache-protecteurs utilisés dans le secteur de l'industrie automobile ou similaire lors d'une opération de peinture, mais il est évident que cela n'est pas limitatif et que les produits conformes à l'invention pourraient être utilisés dans d'autres domaines où se pose le problème de la protection, temporaire ou non, d'une surface ou d'un objet.

Dans le domaine de l'industrie automobile et plus particulièrement lors de la réalisation des opérations de peinture, on utilise des caches thermoformés qui sont disposés en regard de la surface ou zone à protéger et maintenus contre cette dernière par des systèmes de clipsage. Cette solution donne satisfaction d'un simple point de vue technique, mais en pratique elle présente comme inconvénients de nécessiter des points d'ancrage ou de préhension sur la surface à protéger.

Par ailleurs, également dans le domaine de la peinture, il a été proposé depuis fort longtemps, lorsque l'on souhaite masquer des surfaces planes, d'utiliser des bandes ou rubans autoadhésifs. De telles bandes ou rubans autoadhésifs ont comme avantage d'être peu coûteux et faciles à mettre en place. En revanche, ils ne peuvent pas être utilisés lorsque l'on souhaite masquer des zones ou surfaces de formes complexes (en relief ou en creux). Dans le domaine de l'assemblage de deux éléments, il est bien connu que le clipsage et le collage sont des moyens équivalents. Or à ce jour, du moins à la connaissance du Demandeur, personne n'a proposé de rendre adhésifs des caches thermoformés afin d'éliminer les inconvénients que présente la solution du maintien de tels caches par clipsage. Un tel a priori des spécialistes peut s'expliquer par le fait que logiquement, il aurait fallu une opération complémentaire de dépôt de colle sur la surface de l'objet après réalisation du thermoformage et, qu'alors, se serait posé le problème de protéger cette surface encollée pour stocker, transporter lesdits caches.

Or on a trouvé, et c'est ce qui fait l'objet de la présente invention, qu'il était possible d'obtenir directement par thermoformage de tels objets présentant des formes complexes et dont l'une des surfaces présente des propriétés adhésives sur l'une de ses faces, à condition de réaliser l'opération de thermoformage sur un complexe plat, comportant, non seulement une couche de matière de base thermoplastique conventionnelle, mais également l'adhésif final qui doit être présent sur la face destinée à être collée contre la surface à protéger, ainsi que la feuille de protection, pelable, nécessaire au stockage, transport de l'article thermoformé rendu ainsi autocollant, ledit complexe se caractérisant en ce que :

— la couche de matériau de base est constitué d'une feuille thermoplastique (PVC/ABS/Polystyrène/PET) d'épaisseur relativement importante, comprise en général entre 0,2 et dix millimètres ;

— l'adhésif déposé sur l'une des surfaces de cette feuille de base est sélectionné parmi les adhésifs résistant à la température de thermoformage de la feuille de base ;

— la feuille de protection rapportée sur la couche d'adhésive est à base d'un film thermoformable et souple (polypropylène ou polyéthylène), ledit film ayant reçu un traitement approprié (silicone ou traitement corona) lui permettant de n'adhérer que faiblement à l'adhésif, afin qu'il puisse être enlevé lors de l'utilisation, ce film ayant une très faible épaisseur (comprise entre 0,01 mm et 0,3 mm) par rapport à la feuille thermoplastique de base.

Il convient également de noter que, conformément à l'invention, la feuille de protection rapportée sur la couche adhésive doit présenter un pouvoir de retrait légèrement inférieur à celui de la couche de matière de base (de l'ordre de quelques pourcent), ce qui permet, après thermoformage, d'obtenir un article dans lequel ladite couche de protection adhère parfaitement à l'adhésif, sans former de pli.

Grâce à une telle sélection de composants, il a été constaté que l'on pouvait réaliser le thermoformage de pièces de toutes formes sans aucun problème particulier, la feuille de protection adhérant, après thermoformage, parfaitement à la surface revêtue de la composition adhésive et pouvant être enlevée facilement.

L'invention et les avantages qu'elle apporte seront cependant mieux compris grâce à l'exemple de réalisation donné ci-après à titre indicatif et non limitatif, et qui est illustré par les schémas annexés dans lesquels :

— la figure 1 illustre schématiquement la structure d'un matériau complexe permettant l'obtention d'un article thermoformé conforme à l'invention ;

— la figure 2 illustre schématiquement en coupe le processus opératoire de thermoformage et ;

— la figure 3 est une vue en coupe schématique d'un article thermoformé réalisé conformément à l'invention.

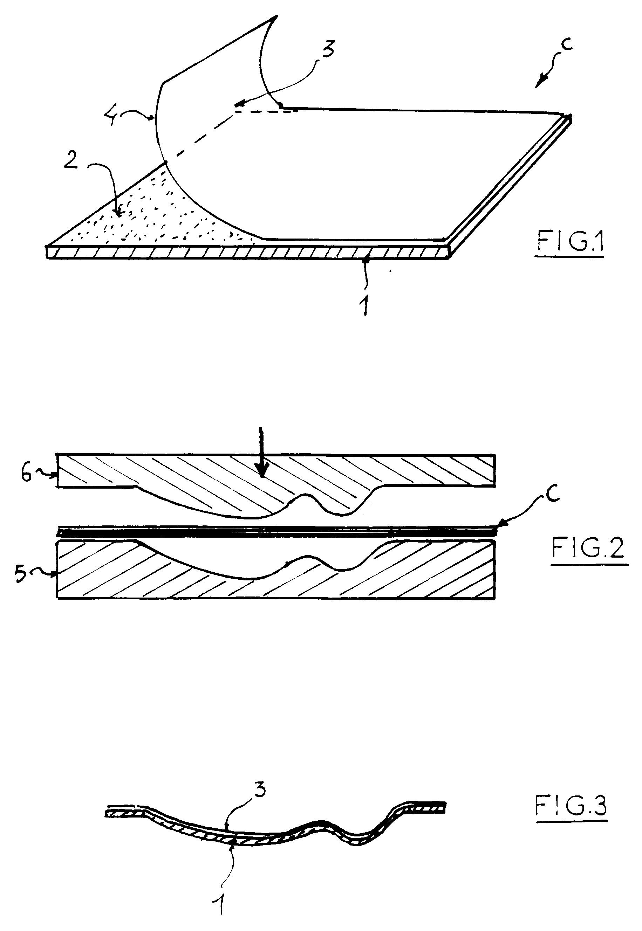

Si l'on se reporte aux schémas annexés, pour réaliser un article thermoformé conforme à l'invention, on utilise un matériau complexe du type illustré à la figure 1 et qui, d'une manière générale, se compose d'une couche de base (1). Cette couche de base (1) est à base de toute matière thermoformable, tel que PVC, ABS, polystyrène, PET. Bien entendu, il pourrait comporter des charges diverses, telles que par exemple des fibres de renforcement. Cette feuille de base a une épaisseur relativement importante comprise en général entre 0,2 et dix millimètres. L'une des faces de cette couche est revêtue d'une pellicule de colle déposée par toute technique appropriée telle que, par exemple, pulvérisation, dépôt au rouleau... Cette colle ou adhésif est choisie parmi les produits susceptibles de résister à la température ultérieure de thermoformage et en fonction de l'emploi final souhaité (fixation temporaire de l'article thermoformé ou au contraire fixation permanente, état de surface contre lequel l'article thermoformé doit être apposé..). Enfin, sur la couche de colle (2), est disposée une feuille pelable protectrice (3) constituée également d'un film thermoformable (polypropylène ou polyéthylène), ce film thermoformable devant présenter des caractéristiques de souplesse et un pouvoir de retrait légèrement inférieur au matériau de base. Ce film a reçu sur l'une de ses faces (4) un traitement approprié (traitement au silicone ou traitement corona) lui permettant de n'adhérer que faiblement à l'adhésif (2) afin qu'il puisse être enlevé lors de l'utilisation. Ce film a une très faible épaisseur par rapport à la feuille thermoplastique de base (1), cette épaisseur étant comprise entre 0,01 mm et 0,3 mm.

Un tel matériau complexe peut être thermoformé de manière conventionnelle au moyen d'une presse telle qu' illustrée à la figure 2. Lors de l'opération de thermoformage, le complexe (C) décrit précédemment est disposé entre les deux éléments (5, 6) de la presse. L'opération de thermoformage est réalisée de manière classique, la température de traitement et la pression étant réglées en fonction du matériau à traiter. En procédant de la manière précitée, il a été possible d'obtenir des complexes de formes diverses, tel qu'illustré par exemple à la figure 3. De tels complexes peuvent présenter une surface adhésive soit du côté concave tel qu'illustré à la figure 3, voire éventuellement du côté convexe. A titre indicatif, il était possible de réaliser des caches protecteurs utilisables dans le domaine de l'automobile en utilisant un complexe (C) constitué d'une couche d'ABS ayant une épaisseur de un millimètre, cette couche d'ABS étant recouverte d'un adhésif approprié et protégé par une feuille pelable (3) constituée par un film de polypropylène traité au silicone, ayant une épaisseur de 0,15 mm. Il a été constaté que l'opération de thermoformage était réalisée sans aucun problème et qu'après thermoformage, la feuille pelable (3) épousait parfaitement la surface encollée.

Comme dit précédemment, un tel résultat peut être expliqué grâce à la solution particulière des matières entrant dans la composition du complexe de base et surtout dans le choix de la pellicule protectrice (3) qui est constituée d'un film très fin, souple, et qui présente un pouvoir de retrait légèrement inférieur à celui de la couche de matière de base (1).

Bien entendu, l'invention n'est pas limitée à l'exemple de réalisation décrit précédemment. Ainsi, il pourrait être envisagé de ne déposer l'adhésif que sur certaines parties de la feuille, par exemple en périphérie. Comme cela a été dit précédemment, si l'article thermoformé autoadhésif conforme à l'invention peut être utilisé en vue d'une protection temporaire, il peut également être envisagé de l'utiliser pour le laisser à demeure contre une surface ou objet (automobile ou toute autre application) en vue par exemple de réaliser une décoration.

## Revendications

1. Article thermoformé présentant des propriétés adhésives sur l'une de ses faces, obtenu par thermoformage d'un complexe plat, comportant non seulement une couche de matière de base thermoplastique conventionnelle (1), mais également l'adhésif final (2) qui doit être présent sur la face destinée à être collée contre la surface à protéger, ainsi que la feuille de protection (3), pelable, nécessaire au stockage, transport de l'article thermoformé rendu ainsi autocollant, ledit complexe se caractérisant en ce que :

— le matériau de base est constitué d'une feuille thermoplastique (PVC/ABS/Polystyrène/PET) d'épaisseur relativement importante, comprise en général entre 0,2 et dix millimètres ;

— l'adhésif (2) déposé sur cette feuille de base (1) est sélectionné parmi les adhésifs résistant à la température de thermoformage de la feuille de base (1) ;

— la feuille de protection (3) rapportée sur la couche d'adhésive est à base d'un film thermoformable et souple (polypropylène ou polyéthylène), ledit film ayant reçu un traitement approprié (silicone ou traitement corona) lui permettant de n'adhérer que faiblement à l'adhésif, afin qu'il puisse être enlevé lors de l'utilisation, ce film ayant une très faible épaisseur (comprise entre 0,01 mm et 0,3 mm) par rapport à la feuille thermoplastique de base.

2. Article thermoformé selon la revendication 1, caractérisé en ce que le film protecteur (2) est à base d'un matériau présentant un pouvoir de retrait à la chaleur légèrement inférieur à celui de la matière de base (1).

## Patentansprüche

1. Warmgeformter Gegenstand, der auf einer seiner Flächen Klebeeigenschaften aufweist, und der durch Wärmeformen eines ebenen Verbundmaterials erhalten wurde, wobei dieser nicht nur eine Schicht an konventionellem thermoplastischen Material (1) aufweist, sondern zugleich das letztendliche Klebemittel (2) aufweist, das auf derjenigen Fläche vorhanden ist, die dazu bestimmt ist, gegen die zu schützende Oberfläche geklebt zu werden, sowie ferner die abziehbare Schutzfolie (3) aufweist, die zum Lagern und Transportieren des wärmegeformten Gegenstandes notwendig ist und diesen somit selbstklebend macht, wobei das Verbundmaterial dadurch gekennzeichnet ist,

— daß das Basismaterial aus einem thermoplastischen Bogen (PVC/ABS/Polystyrol/PET) mit relativ großer Dicke, allgemein zwischen 0,2 und 10 mm besteht ;

— daß das Klebemittel (2), das auf diesem Bogen aufgebracht ist aus denjenigen Klebemitteln ausgewählt ist, die der Temperatur beim Wärmeformen des Basisbogens (1) widerstehen ; und

— daß die auf die Klebeschicht aufgebrachte Schutzfolie (3) auf Basis einer wärmeformbaren und flexiblen Folie aufgebaut ist (Polypropylen oder Polyethylen), wobei die Folie einer geeigneten Behandlung unterzogen wurde (Silikon oder Koronabehandlung), wodurch diese nur schwach am Klebemittel haftet, so daß sie bei der Verwendung abgenommen werden kann, wobei die Folie eine sehr geringe Dicke (zwischen 0,01 mm und 0,3 mm) im Vergleich zum thermoplastischen Basisbogen aufweist.

2. Wärmegeformter Gegenstand nach Anspruch 1, dadurch gekennzeichnet, daß die Schutzfolie (2) aus einem Material hergestellt ist, das ein Wärmeschrumpfvermögen aufweist, das geringfügig unter dem des Basismateriales (1) liegt.

**Claims**

1. Thermoformed article exhibiting adhesive properties on one of its faces, obtained by thermoforming a flat composite comprising not only a layer of conventional thermoplastic base material (1) but also the final adhesive (2), which must be present on the face intended to be adhesively bonded against the surface to be protected, and the protective sheet (3), peelable and necessary for the storage and transport of the thermoformed article which is thus made self-adhesive, the said composite being characterised in that :

— the base material consists of a thermoplastic (PVC/ABS/polystyrene/PET) sheet of relatively high thickness, which is generally between 0.2 and ten millimetres ;

— the adhesive (2) deposited onto this base sheet (1) is chosen from adhesives which withstand the temperature for thermoforming the base sheet (1) ;

— the protective sheet (3) added onto the adhesive layer is based on a thermoformable and flexible (polypropylene or polyethylene) film, the said film having received a suitable treatment (silicone or corona treatment) enabling it to adhere only weakly to the adhesive, so that it can be removed when being used, this film being of very low thickness (between 0.01 mm and 0.3 mm) relative to the thermoplastic base sheet.

2. Thermoformed article according to Claim 1, characterised in that the protective film (2) is based on a material exhibiting a heat-shrinkability which is slightly lower than that of the base substance (1).

FIG.1

FIG.2

FIG.3